(19) Europäisches Patentamt
European Patent Office
Office européen des brevets

(11) **EP 3 148 173 A1**

(12) **EUROPEAN PATENT APPLICATION**

(43) Date of publication:
**29.03.2017 Bulletin 2017/13**

(51) Int Cl.:
***H04N 1/60*** (2006.01)

(21) Application number: **16190283.8**

(22) Date of filing: **23.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2015 EP 15306510**

(71) Applicant: **Thomson Licensing
92130 Issy-les-Moulineaux (FR)**

(72) Inventors:
• LEFEBVRE, Frédéric
35576 Cesson-Sévigné (FR)
• DEMOULIN, Vincent
35576 Cesson-Sévigné (FR)
• HELLIER, Pierre
35576 Cesson-Sévigné (FR)

(74) Representative: **Tarquis-Guillou, Anne
TECHNICOLOR
1-5, rue Jeanne d'Arc
92130 Issy-les-Moulineaux (FR)**

(54) **METHOD FOR COLOR GRADING OF A DIGITAL VISUAL CONTENT, AND CORRESPONDING ELECTRONIC DEVICE, COMPUTER READABLE PROGRAM PRODUCT AND COMPUTER READABLE STORAGE MEDIUM**

(57) The disclosure relates to a method for color grading at least one first color frame according to at least one first reference color frame,

According to an embodiment, the method comprises:

selecting a color transformation already applied to at least one second color frame, according to at least one second reference color frame, said second color frame being different from said first color frame;
applying, to said first color frame, said selected color transformation.

The disclosure also relates to corresponding electronic device, computer readable program product and computer readable storage medium.

Figure 1

**Description**

**1. Technical field**

The present disclosure relates to the field of color grading of digital visual content. By "digital visual content", it is to be understood an audiovisual content comprising visual items, like images, pictures, photos, drawings, frames or groups of pixels from a video, movie or collection of stills. Such a content can also comprise other data, for instance metadata.

A method for color grading of the digital visual content, and corresponding electronic device, computer readable program products and computer readable storage media are described.

**2. Background art**

Color grading is the process of altering and enhancing the color of, for example, a motion picture, video image, or still image, either electronically, photo-chemically or digitally. Modern color grading (color correction or remastering), for instance for theatrical film, video distribution, or print, is generally done digitally in a color suite. For instance, a film scanner scans original film stock for storage as high-resolution digital intermediate files. Units may scan gauges from 8 mm to 70 mm (8 mm, Super 8, 9.5 mm, 16 mm, Super 16, 35 mm, Super 35, 65 mm and 70 mm) with very high resolution scanning of 2K, 4K or 8K video format resolutions (2K is approximately 2048x1080 pixels and 4K is approximately 4096x2160 pixels). Subsequently, color matching is performed, for example, to color a 4K scanned version of a movie, given a color graded Standard Definition (SD) version as a reference, in order to automatically recolor the film according to the original artistic intent.

For the process of color remastering to be efficient, this recoloring is based on a color transformation applied to each shot of the scanned content. In film making and video production, a shot is a series of frames that runs for an uninterrupted period of time. In particular, in film editing, a shot is the continuous footage or sequence between two edits or cuts.

The color transformation to be applied to a shot of the scanned version can be computed from some exemplary pairs of frames from both the reference version and the scanned version.

The number of exemplary pairs needed for a shot depends on the shot content. For example, there are static shots where only one exemplary pair is sufficient and dynamic shots where colors change drastically between the beginning and end of the shot. For the latter, several exemplary pairs are mandatory to efficiently capture the color match over the entire shot.

In the above example, prior to the computing of a color transformation, it is necessary to spatially match each frame of an exemplary pair. Such a spatial matching can be perform using known techniques of key points extraction (https://en.wikipedia.org/wiki/Feature detection (computer vision)), description and matching, like Sift technique (https://en.wikipedia.org/wiki/Scale-invariant feature transform).

Unfortunately, because the color grading process is often performed automatically, the color transformation applied to some shot can sometime lead to poor results. In can be the case for instance for shots where the geometric alignment has failed or for very noisy shots.

It is therefore of interest to propose efficient techniques for improving the result of color grading of a given shot of a visual content, compared to the prior art color grading solutions.

**3. Summary**

The present principles propose a method for color grading at least one first color frame according to at least one first reference color frame, said method comprising:

- selecting a color transformation already applied to at least one second color frame, according to at least one second reference color frame, said second color frame being different from said first color frame;
- applying, to said first color frame, said selected color transformation.

According to an embodiment of the present disclosure, said first and second color frames are part of a same visual content.

According to an embodiment of the present disclosure, said first and second reference color frames are part of a same visual content.

According to an embodiment of the present disclosure, selecting said color transformation takes into account at least one criterion of spatial, temporal and/or color proximity between said first and said second color frames.

According to an embodiment of the present disclosure, said first and/or second color frame is a still image.

According to an embodiment of the present disclosure, said first color frame belongs to a first shot of a first audiovisual content, said first reference color frame belongs to a first reference shot of a first reference audiovisual content, said first reference shot corresponding to said first shot in said first reference audiovisual content; and said method comprises associating said first shot to at least one pair of matching frames, comprising an input frame belonging to said first shot and a reference frame belonging to said first reference shot and in that said color transformation applied to said transformed frame is determined according to said pair of matching frames associated with said first shot.

According to an embodiment of the present disclosure, said method comprises selecting said first color frame according to a distance between a color distribution of a transformed frame obtained by applying a color transformation to said first color frame and a color distribution of said first reference frame of said first reference audiovisual content.

According to an embodiment of the present disclosure, said second color frame belongs to a second shot of a second audiovisual content, said second reference color frame belongs to a second reference shot of a second reference audiovisual content, said second reference shot corresponding to said second shot in said second reference content; and said method comprises associating said second shot to at least one pair of matching frames, comprising an input frame belonging to said second shot and a reference frame belonging to said second reference shot and in that said color transformation already applied to said second color frame has been determined according to said pair of matching frames associated with said second shot.

According to an embodiment of the present disclosure, said method comprises selecting said second shot according to a distance between a color distribution of a transformed frame obtained by applying said color transformation to said second color frame and a color distribution of a reference color frame of said second reference audiovisual content.

According to an embodiment of the present disclosure, said distance is a Bhattacharyya distance between said color distributions.

According an embodiment of the present disclosure, the present principles notably propose a method for color grading a plurality of shots belonging to a same input digital visual content according to a reference visual content, said method comprising, for each shot of said plurality of shots:

- applying a first color transformation to at least one frame of said input visual content, according to at least one shot of said reference visual content, said applying resulting in a transformed frame.

According to an embodiment of the present disclosure, said method comprises applying to at least one frame of at least one given shot a second color transformation already applied to at least one frame of another shot of said input content.

According to an embodiment of the present disclosure, the visual content and the reference visual content can relate to the same physical event. For instance, it can be an event belonging to a group of events constituted of:

- a visual event that happens in a vicinity of a plurality of cameras;
- a same movie.

According to an embodiment of the present disclosure, said second color transformation is chosen according to at least one criterion of spatial, temporal and/or color proximity between said given shot and said another shot.

As a first exemplary embodiment, a criterion of spatial proximity can be used when both shots are visually similar (like near-duplicated shots).

As a second exemplary embodiment, a criterion of temporal proximity can be used when both shots are temporally close.

As a third exemplary embodiment, a criterion of color proximity can be used when both shots have the same main color.

According to an embodiment of the present disclosure, said method comprises, for each shot of said input content, associating said shot to at least a pair of matching frames, comprising an input frame belonging to said shot and a reference frame belonging to a shot corresponding to said given shot in said reference content and said first color transformation is determined according to said matching pair.

According to an embodiment of the present disclosure, said method comprises selecting said given shot according to a distance between a color distribution (or in other term evolution) of said transformed input frame of said given shot and a color distribution of said reference frame of said given shot.

According to an embodiment of the present disclosure, said method comprises selecting said another shot according to the distance between a color distribution of said transformed input frame of said another shot and a color distribution of said reference frame of said another shot.

According to an embodiment of the present disclosure, said distance is a Bhattacharyya distance between said color distributions.

According to another aspect, the present disclosure relates to an electronic device comprising at least one memory and one or several processors.

According to an embodiment of the present disclosure, said one or several processors are configured for collectively color grading at least one first color frame according to at least one first reference color frame, said color grading comprising ;

- selecting a color transformation already applied to at least one second color frame, according to at least one second reference color frame, said second color frame being different from said first color frame;
- applying, to said first color frame, said selected color transformation.

Said one or several processors can be configured for executing the method of the present disclosure in any of its embodiments.

According to an embodiment of the present disclosure, said first and second color frames are part of a same visual content.

According to an embodiment of the present disclosure, said first and second reference color frames are part of a same visual content.

According to an embodiment of the present disclosure, selecting said color transformation takes into account at least one criterion of spatial, temporal and/or color proximity between said first and said second color frames.

According to an embodiment of the present disclosure, said first and/or second color frame is a still image.

According to an embodiment of the present disclosure, said one or several processors are configured for collectively color grading a plurality of shots belonging to a same input digital visual content according to a reference visual content, said color grading comprising:

for each shot of said plurality of shots:

- applying a first color transformation to at least one frame of said input visual content, according to at least one shot of said reference visual content, said applying resulting in a transformed frame.

According to an embodiment of the present disclosure, said one or several processors are configured for collectively applying to at least one frame of at least one given shot a second color transformation already applied to at least one frame of another shot of said input content.

According to an embodiment of the present disclosure, said second color transformation is chosen according to at least one criterion of spatial, temporal and/or color proximity between said given shot and said another shot.

According to an embodiment of the present disclosure, said one or several processors are configured for collectively associating, for each shot of said input content, said shot to at least one pair of matching frames, comprising an input frame belonging to said shot and a reference frame belonging to a shot corresponding to said given shot in said reference content and said first color transformation is determined according to said matching pair.

According to an embodiment of the present disclosure, said one or several processors are configured for collectively selecting said given shot according to a distance between a color distribution of said transformed input frame of said given shot and a color distribution of said reference frame of said given shot.

According to an embodiment of the present disclosure, said one or several processors are configured for collectively selecting said another shot according to the distance between a color distribution of said transformed input frame of said another shot and a color distribution of said reference frame of said another shot.

According to an embodiment of the present disclosure, said distance is a Bhattacharyya distance between said color distributions.

According to another aspect, the present disclosure relates to a non-transitory program storage device, readable by a computer.

According to an embodiment of the present disclosure, said non-transitory computer readable storage device tangibly embodies a program of instructions executable by a computer to perform the method of the present disclosure in any of its embodiments.

According to an embodiment of the present disclosure, said non-transitory computer readable storage device tangibly embodies a program of instructions executable by a computer to perform a method for color grading at least one first color frame according to at least one first reference color frame, said method comprising:

- selecting a color transformation already applied to at least one second color frame, according to at least one second reference color frame, said second color frame being different from said first color frame;
- applying, to said first color frame, said selected color transformation.

According to an embodiment of the present disclosure, said non-transitory computer readable storage device tangibly embodies a program of instructions executable by a computer to perform a color grading of a plurality of shots belonging to a same input digital visual content according to a reference visual content, the color grading comprising, for each shot of said plurality of shots :

- applying a first color transformation to at least one frame of said input visual content, according to at least one shot of said reference visual content, said applying resulting in a transformed frame.

According to an embodiment of the present disclosure, the color grading comprises applying to at least one frame of at least one given shot a second color transformation already applied to at least one frame of another shot of said input content.

According to another aspect, the present disclosure relates to a non-transitory computer readable program product.

According to an embodiment of the present disclosure, said non-transitory computer readable storage product tangibly embodies a program of instructions executable by a computer to perform the method of the present disclosure in any of its embodiments.

According to an embodiment of the present disclosure, the non-transitory computer readable program product comprises program code instructions for performing, when said non-transitory software program is executed by a computer, a method for color grading at least one first color frame according to at least one first reference color frame, said method comprising:

- selecting a color transformation already applied to at least one second color frame, according to at least one second reference color frame, said second color frame being different from said first color frame;
- applying, to said first color frame, said selected color transformation.

According to another aspect, the present disclosure relates to a computer readable storage medium carrying a software program comprising program code instructions for performing the method of the present disclosure, in any of its embodiments, when said software program is executed by a computer.

According to an embodiment of the present disclosure, said computer readable storage medium comprises program code instructions for performing, when said non-transitory software program is executed by a computer, a method for color grading at least one first color frame according to at least one first reference color frame, said method comprising:

- selecting a color transformation already applied to at least one second color frame, according to at least one second reference color frame, said second color frame being different from said first color frame;
- applying, to said first color frame, said selected color transformation.

According to an embodiment of the present disclosure, said computer readable storage medium carries a software program comprising program code instructions for performing color grading of a plurality of shots belonging to a same input digital visual content according to a reference visual content, the color grading comprising, for each shot of said plurality of shots:

- applying a first color transformation to at least one frame of said input visual content, according to at least one shot said of said reference visual content, said applying resulting in a transformed frame.

According to an embodiment of the present disclosure, the color grading comprises applying to at least one frame of at least one given shot a second color transformation already applied to at least one frame of another shot of said input content.

**4. List of drawings**

The present disclosure will be better understood, and other specific features and advantages will emerge upon reading the following description, the description making reference to the annexed drawings wherein:

- Figure 1 is a functional diagram that illustrates a particular embodiment of the color garding method of the present disclosure;
- Figure 2 illustrates an electronic device according to at least one particular embodiment of the present disclosure;

It is to be noted that the drawings have only an illustration purpose and that the embodiments of the present disclosure are not limited to the illustrated embodiments.

## 5. Detailed description of the embodiments

At least some principles of the present disclosure relate to color grading of an input content by using a reference content. In the particular embodiment described, the two contents are related to the same movie. The reference content (denoted herein $I_{ref}$), for instance a SD version, corresponds to the oldest version (eventually damaged) of the movie, manually color graded. Some frames are eventually missing due to manual cuts in the film.

The input content (denoted herein $I_{input}$) is a more recent version that corresponds to a 4K-resolution scan of the film of the movie. It needs to be color graded according to the reference content.

Of course, the particular embodiment described herein is only presented as an exemplary use case and the principles of the present disclosure can also apply to many different use cases. For instance, they can apply to a color grading of several digital visual contents according to one reference visual content, or to color grading of digital visual content of other format than the one described herein, or to color grading of digital visual content according to a reference content of other format than the one described herein.

For instance, in a context of multiview contents, the principles of the present disclosure can be applied for color grading at least one of the multiview contents according to another one of the Multiview contents (being used as a reference content).

The principles of the present disclosure can be applied to multiview contents being for instance two contents to be used for rendering a three-dimensionnal (3D) film, one of the multiview contents being intended to be viewed by a left eye of a user and another of the multiview contents being intended to be viewed by a right eye of a user.

The principles of the present disclosure can also be applied to multiview contents such as contents captured by different cameras, used by different users notably, of a same event (like a wedding for instance). The cameras can correspond to different viewing points of the same event.

In a variant, the principles of the present disclosure can also be applied to multiview contents such as contents captured by a same camera permitting to acquire different viewing points, like a spherical camera or a plenoptic camera with several lenses, or with several cameras like a camera rig.

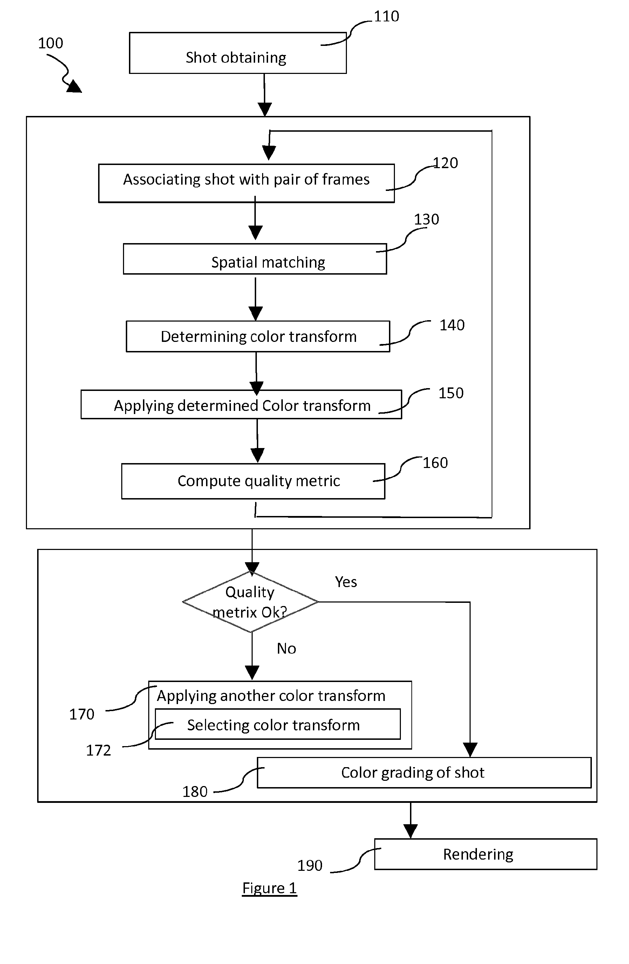

**Figure 1** illustrates a flowchart of an exemplary method of color grading, or remastering, of the input digital visual content according to the present principles.

In the illustrated embodiment, the method 100 comprises an obtaining 110 of consistent boundaries of shots in both said input content and said reference content. In some embodiment, the boundaries of shots inside the input and reference version can have been previously determined consistently, either locally or remotely. Thus, in some embodiment, the shot obtaining can comprise reading of local storage medium, like a memory of the device in which the method is implemented or a removable storage unit (like a USB key, a compact disk, and so on). In such an embodiment, shot boundaries can be stored in association with the corresponding input or reference visual content or separately. In other embodiments, where the shot boundaries have been defined remotely, the shot boundaries can be obtained from a communication interface.

Depending on embodiments, the shot obtaining 110 can be performed by interacting with a user, the boundaries being acquiring thanks to a user interface (like an display, a mouse,...) or automatically, with or without confirmation from a user.

In some embodiment, the color grading method can comprise synchronizing at least one of the shots defined in the input content with the corresponding shot defined in the reference version, if both shots have not exactly the same length (in order notably to take into account the position of at least one missing frame in the shot defined from the reference version). This synchronizing is optional.

According to an embodiment, the method also comprises associating 120, to each shot of the input content, at least one pair of corresponding frames, an input frame belonging to the considered shot and a reference frame being a frame corresponding to the input frame in the reference content, in order to be used as a goal of the color grading process for the input frame.

The associating can comprise selecting at least one reference frame from a shot of the reference digital visual content and retrieving the corresponding (or equivalent) input frame in the corresponding shot of the digital visual content to be remastered (scanned, copied, or damaged version). In such an embodiment, a shot of the input content is thus logically associated to all pairs comprising an input frame belonging to this shot.

According to figure 1, the method can also comprise spatial matching 130 of frames belonging to the same pair of corresponding frames - one from the reference content and the other from the input content to be remastered -. Notably, the spatial matching can use techniques of key point extraction, description and matching (like a Scale Invariant Feature Transform - SIFT).

In the particular embodiment illustrated, the method comprises determining 140 a first color transformation to be applied to a given shot. For instance, it can be a color transformation adapted to transformation of an input frame of a pair of spatially matching frames associated to that given shot according to the reference frame of the same pair.

In some embodiments, the color transformation can be, for example:

- a Color Decision List (CDL) transformation estimated by gradient descent on the three parameters (slope, offset and power) per color channel (red, green and blue);
- a 3D LUT (look up table) computed by finding clusters of color pairs, and finding the 3D spline model that best fits the matching between frames of a pair;
- a 1D LUT (look up table) computed by finding clusters of color pairs, and finding the 1D spline model that best fits the matching between frames of a pair;
- a combination of at least two of the above transformations and/or computations.

It is to be noted that in some embodiment, all the color transformations applied to input frames of an input content can belong to a particular set of color transformations. When the input content is an episode of a series, such a set of color transformations can be for instance a set of color transformations that have already been used for another episode of a same series (like the first episode) and are to be used for all episodes of the series, in order to give of a color unity to the entire series. In some embodiments, one of the episode can be used as a reference content.

According to the illustrated embodiment, the method also comprises applying the first color transformation 150 determined for a given shot of the input content to at least one frame of the given shot, in order to evaluate effects of the color transformation.

In some embodiments, like in the detailed embodiments, the applying can be performed for all shots of the input content or for only a part of the shots of the input content (for instance shot selected randomly or according to a constant sampling rate).

Depending upon embodiments, a color transformation can be applied to all frames of a given shot, or to some frames of the given shot, for instance to at least one input frame of at least one pair associated to the given shot. Indeed, in some embodiment that can provide some advantage in term of reliability, a color transformation can be applied to all the frames of a slot, in order to assess a quality metric at the shot level. In other embodiment that can offer some advantage in term of simplicity and speed, the quality of a color transformation can be assessed only on some frames of the corresponding shot (for instance on input frames of matching pairs associated with the shot).

In the illustrated embodiment, where a determined first color transformation is applied 150 to each input frame of at least one pair associated to the given shot, the result of the application of the determined color transformation to the input frame is a transformed input frame that is used for assessing how much the applied transformation fit the concerned shot. This assessing can be performed manually or automatically, depending upon embodiments. More precisely, according to the detailed embodiment, the method comprises computing 160 a quality metric $Q_i$ for each shot $i$ of the input content that takes into account the result of the color transformation applied to the input frame of at least one pair associated with the shot $i$. The quality metric $Q_i$ can for instance take into account a distance, for a given pair associated with the shot $i$, between the reference frame of the given pair and the color transformed input frame of the same given pair.

According to the detailed embodiment, the quality metric is assessed according to color distribution (or histogram) distance. Of course, depending upon embodiments, the quality metric can be assessed manually by a user, or according to any available histogram computation and histogram distance.

In image processing and photography, a color histogram is an information representative of the distribution of colors in an image. For digital visual content items, a color histogram represents the number of pixels that have colors in each of a fixed list of color ranges spanning the color space of the digital visual content item (the set of all possible colors). The color histogram can be built for any kind of color space, although the term is more often used for three-dimensional spaces like RGB (Red, Green, Blue) or HSV (hue, Saturation, Value) where three numerical values represent a color and are mapped to the manner in which the human eye responds to the color (trichromaticity values).

For monochromatic digital visual content items, the term intensity histogram may be used instead. For multi-spectral digital visual content items, where each pixel is represented by an arbitrary number of measurements (for example, beyond the three measurements in RGB), the color histogram is $M$-dimensional, with $M$ being the number of measurements taken. Each measurement has its own wavelength range of the light spectrum, some of which may be outside the visible spectrum.

If the set of possible color values is sufficiently small, each of those colors may be placed on a range by itself; then the histogram is merely the count of pixels that have each possible color. Most often, the space is divided into an appropriate number of ranges, often arranged as a regular grid, each containing many similar color values. The color histogram may also be represented and displayed as a smooth function defined over the color space that approximates the pixel counts. Like other kinds of histogram, the color histogram is a statistic that can be viewed as an approximation of an underlying continuous distribution of colors values.

One example of a distance measure between histograms is the Bhattacharya distance. Other forms of distance also apply, for example, Euclidean, Manhattan, Vector Cosine Angle, Histogram Intersection, Jensen-Shannon Divergence, etc. In statistics, the Bhattacharyya distance measures the similarity of two discrete or continuous probability distributions. It is closely related to the Bhattacharyya coefficient which is a measure of the amount of overlap between two statistical samples or populations.

For discrete probability distributions $q_0$ and $q_1$ over the same domain X , the Bhattacharyya distance is defined as:

$$D_B(q_0, q_1) = -\ln(BC\ (q_0, q_1)) \qquad (1)$$

where BC(.,.) is the Bhattacharyya coefficient, defined as:

$$BC\ (q_0, q_1) = \sum_{x \in X} \sqrt{q_0(x)q_1(x)} \qquad (2)$$

In the illustrated embodiment, if $k$ pairs of frames are associated with the shot $i$, noted as $R_1, \cdots, R_k$ for the reference version, and $I_1, \cdots, I_k$ for the input version to be color graded and $T_i$ designates the color transformation applied to each input frame $j$ of the shot $i$, the quality metric can be evaluated by:

$$Q_i = 1 - \sum_j d(R_j, T_i(\ I_j)),$$

where

- $T_i(I_j)$ denotes the result of the application of the color transformation $T_i$ to the frame $I_j$ (for instance, when $I_j$ is an image, to each pixel of $Ij$) and
- d stands for any image distance, for instance the Battacharya distance between color histograms (or distributions).

In some embodiment, the assessing of how much an applied transformation fits the concerned shot can be performed in cumulative measurement, at shot level.

In such an embodiment, the method can comprise:

- Building an accumulated color histogram $H_{4k}$, based on all the frames of the given shot;
- Building an accumulated color histogram $H_{ref}$ based on all the frames of the corresponding shot of the reference content (for instance if the given shot is the i-th shot of the input content, the corresponding shot is the i-th shot of the reference content).

For each color channel c (like Red (R), Green (G) and Blue (B) channels) and for each candidate transformation $T$, a transformed histogram $H_{4k}^{def} = W_T(H_{4k})$ can be obtained, where $W_T$ is the transformation that applies on a histogram and is obtained from T, the transformation that applies on an image in the following way :

$$W_T :\ H_{4k}^{def}(i) = \sum_{\{i\ st.\ T(j)=i\}} H_{4k}(j)$$

In some other embodiment, the accumulated histogram can be built by applying the color transformation to every frame of the shot and then constructing the accumulated histogram of the transformed frames.

In still other embodiment, where a determined color transformation T is invertible, values of the accumulated histogram $H_{4k}$ can be obtained by using the inverse transformation of the color transformation $T$.

Indeed, for all bins $j$ of the histogram, the transformed histogram can be expressed as: $H_{4k}^{def}(j) = H_{4k}(T^{-1}(j))$, where $T^{-1}$ denotes the inverse transformation.

Such an embodiment can offer some advantage in terms of efficiency, notably for input content comprising high resolution frames. Examples of invertible color transformation are color transformations that are separable in color transformations being one dimensional (1 D) color transformation, like color transformations of CDL type or of 1-D LUT type.

Finally, the distance between the transformed histogram and the reference histogram is constructed as $d(H_{4k}^{def}, H_{ref})$, as the battacharya distance for instance.

In the illustrated embodiment, the method comprises selecting at least one shot, for which the color transformation that has been applied is to be modified. Such a shot can be selected according to its evaluated quality metric. For instance, the shot having the worth quality metric (like the lowest in the illustrated embodiment) can be selected. In some embodiment, the shots can be selected according to a comparing between their quality metric and a given threshold. In the illustrated embodiment, where a Gaussian distribution $Q$ of all the computed quality metrics is assumed, shots are selected based on a position of their quality metric in this Gaussian distribution. More precisely, a shot $i$ is selecting when its quality metric $Q_i$ is such that:

$$Q_i < E(Q) - 3 * E(Q - E(Q)),$$

where $E$ stands for an empirical mean.

As illustrated in figure 1, the method also comprise applying 170 to at least one part of at least one selected shot (for instance the one having the worth quality metrics) at least one other color transformation. This other color transformation is chosen (or in other word selected) amongst the color transformations that have been previously determined for one of the shots of the input content. Depending upon embodiments, different criteria can be used for choosing or selecting 172 the other color transformation to be applied. In some embodiment, the choice can be made amongst the color transformations previously applied to an input frame of one of the shots of the input content, by taking into account the corresponding quality metric evaluated. For instance, the color transformation chosen can be the one having the best quality metric value. In another embodiment, the choice can be made by taking into account, notably, the value of the corresponding quality metric, compared to a given threshold. As an example, the color transformation can be chosen amongst the ones that result in a quality metric being upper a given threshold. Further, the choice of a color transformation upon candidate color transformations can depend of at least another criterion, for instance at least one criterion related to the "other" shot (called hereafter the "candidate shot") on which candidate color transformations have been applied.

In some embodiment, at least one criterion of temporal proximity between the selected shot and a candidate shot can be used. For instance, the color transformation can be chosen as being the color transformation applied to a candidate shot being the immediate neighbor of the selected shot in the input content (that is to say the shot either directly preceding or following the selected shot in the input content). The color transformation can be chosen as being a color transformation applied to a candidate shot belonging to an interval of a given length around the selected shot. In some embodiments, a criterion of spatial proximity between the selected shot and a candidate shot can be used. Indeed, some shots that can be temporally distant to the selected shot can be however very close semantically to the selected shot. It can be the case for shots like recurring flashback scenes, or scenes occurring in a particular environment. It can be important for the understanding of a viewer of the movie to keep a color unity between such shots. In some embodiments, a criterion of color proximity between the selected shot and a candidate shot can be used. For instance the color transformation can be chosen as being a color transformation applied to a candidate shot having a color histogram close to the color histogram of the selected shot.

In some embodiments, the color transformation can be chosen according to a combination of several criteria, for instance a combination of a criterion of spatial proximity, a criterion of temporal proximity and/or a criterion of color proximity amongst the selected shot and a candidate shot. For instance the color transformation can be chosen as being a color transformation applied to a candidate shot having a color histogram close to the color distribution of the selected shot and belonging to an interval of given length around the selected shot.

Depending upon embodiments, in a combination, different weights can be affected to a criterion. Notably, in some embodiment, a criterion of spatial proximity can be affected a criterion higher than a criterion of temporal proximity.

According to the illustrated embodiment, the method comprise applying the chosen color transformation(s) to a selected shot. In the illustrated embodiment, at least one quality metric is again evaluated, relating to the result of this applying.

In some embodiment, candidate color transformations can be ranked according to at least one criterion and be applied successively on the selected shot until a candidate color transformation results in a satisfying quality metric (for instance a quality metric fulfilling a given threshold). In another embodiment, all color transformations that have been applied to a candidate shot belonging to an interval of a given length around the selected shot and resulting in a quality metric, for that shot, fulfilling a given threshold can be tried successively on the selected shot, in order to finally chose the candidate color transformation that permits to obtain the best quality metric. For instance, if 30 shots have been defined for the input content and if shot 10 is a selected shot, candidate color transformation for shot 10 can be chosen as being a color transformation applied to a candidate shot between shot 5 to shot 15.

In still another embodiment, a combination of at least two chosen transformations can be tried on the selected shot, or a combination of at least one chosen transformation and of the transformation already applied to the selected shot.

As already explained in link with a first applying of a color transformation to at least one frame of a given shot, a color transformation can be applied either to all the frames of the given shot, or to only some frames of a given shot.

In some embodiment, quality metrics can be evaluated similarly during the first applying and during the applying of a chosen transformation. In other embodiments, they can be evaluated differently. In some embodiment, the quality metric used can depend of the shot, of the number of matching pairs associated to a shot and/or of the type of color transformation applied.

In at least some embodiments, such implementation of the color grading method of the present disclosure can offer advantage in terms of efficiency compared to some methods for color grading of the prior art. In particular, in such an embodiment, the color grading method can be, at least partially, performed automatically, without specific action of a user.

In some embodiment, the color grading method can comprise storing the color transformation to be finally applied to a given shot of the input content and color grading the shots according to the stored color transformation

Depending on the shots, the color transformation applied to a given shot can be the one that has been determined initially for the given shot (step 140) or the one that has been finally chosen for the given shot (step 170).

It is to be noted that, in some embodiment, the choice of the color transformation that will finally be applied to each shot of the input content can be performed sequentially, before a sequential applying to each shot, of a finally chosen color transformation. In other embodiments, the choice of a color transformation and its final applying can be performed sequentially, for each shot of the input content. In such an embodiment, in case of a poor quality metric of an applied color transformation, the choice of another candidate color transformation can be performed amongst the color transformations that have already been applied to a shot, and thus amongst the color transformation applied to an already color graded shot preceding the concerned shot.

In one embodiment, the method can also comprise a rendering 190 of at least one frame of a color graded shot. For instance, it can comprise, for at least one given shot of the input content, a visual rendering of frames of at least two of the following shots: the given shot, the corresponding shot of the reference content, the result of the applying of a first, determined, transformation to the given shot, the result of the applying of a second, chosen, color transformation of the given shot. The rendering can also comprise other information like the number of the given shot, a position of at least one boundary of the given shot, at least one parameter relating to the first and/or second transformation applied, an assessed quality metric for the first and/or second color transformation applied, a difference between the position of a boundary of the given shot compared to the corresponding shot of the reference content, a length of the given shot and/or the corresponding shot in the reference content, an identifier of at least one frame of a pair of matching frames associated to the given shot, ....

In the illustrated embodiment, a position of a frame in a content can for instance be expressed in term of duration, from the time of first frame of the content version or as a percentage of the total duration of the content. A position of a shot in a content can for instance be expressed relatively to its first frame position and/or to its last fame position for instance.

Depending upon embodiments, the rendering 190 can comprise displaying at least one of the above information on a display on the device where the color grading method is performed, or printing at least one of the above information, and/or storing at least one of the above information on a specific support.

This rendering is optional.

A skilled artisan will appreciate that other functionalities not described in the present disclosure may be added to the color grading method in order to improve the quality of the end product.

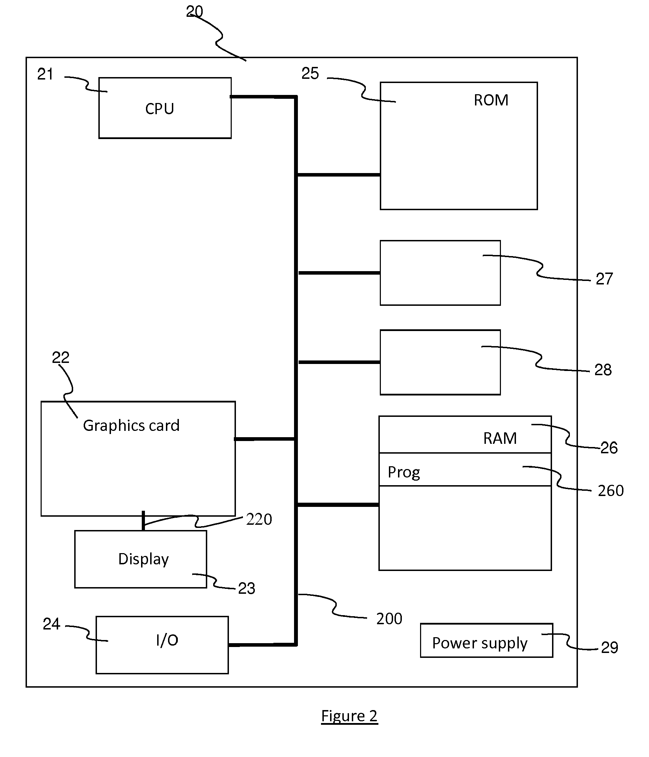

Figure 2 describes the structure of an electronic device 20 configured notably to perform any of the embodiments of the method of the present disclosure.

The electronic device can be any video content acquiring device, like a smart phone or a camera. It can also be a device without any video acquiring capabilities but with video processing capabilities. In some embodiment, the electronic device can comprise a communication interface, like a receiving interface to receive a video content, like a reference video content or an input video content to be processed according to the method of the present disclosure. This communication interface is optional. Indeed, in some embodiments, the electronic device can process video contents, like video contents stored in a medium readable by the electronic device, received or acquired by the electronic device.

In the particular embodiment of figure 2, the electronic device 20 can include different devices, linked together via a data and address bus 200, which can also carry a timer signal. For instance, it can include a micro-processor 21 (or CPU), a graphics card 22 (depending on embodiments, such a card may be optional), at least one Input/ Output module 24, (like a keyboard, a mouse, a led, and so on), a ROM (or « Read Only Memory ») 25, a RAM (or « Random Access Memory ») 26.

In the particular embodiment of figure 2, the electronic device can also comprise at least one communication interface 27 configured for the reception and/or transmission of data, notably video data, via a wireless connection (notably of type WIFI® or Bluetooth®), at least one wired communication interface 28, a power supply 29. Those communication interfaces are optional.

In some embodiments, the electronic device 20 can also include, or be connected to, a display module 23, for instance a screen, directly connected to the graphics card 22 by a dedicated bus 220. Such a display module can be used for instance in order to output (either graphically, or textually) information, as described in link with the rendering step of the method of the present disclosure.

In the illustrated embodiment, the electronic device 20 can communicate with a server thanks to a wireless interface 27.

Each of the mentioned memories can include at least one register, that is to say a memory zone of low capacity (a few binary data) or high capacity (with a capability of storage of an entire audio and/or video file notably).

When the electronic device 20 is powered on, the microprocessor 21 loads the program instructions 260 in a register of the RAM 26, notably the program instruction needed for performing at least one embodiment of the color grading method described herein, and executes the program instructions.

According to a variant, the electronic device 20 includes several microprocessors.

According to another variant, the power supply 29 is external to the electronic device 20.

In the particular embodiment illustrated in figure 2, the microprocessor 21 can be configured for color grading at least one first color frame according to at least one first reference color frame, the color grading comprising ;

- selecting a color transformation already applied to at least one second color frame, according to at least one second reference color frame, the second color frame being different from the first color frame;
- applying, to the first color frame, the selected color transformation.

Notably, the microprocessor can be configured color grading a plurality of shots belonging to a same input digital visual content according to a reference visual content, the color grading comprising, for each shot of the plurality of shots:

- applying a first color transformation to at least one frame of the input visual content, according to at least one shot of the reference visual content, the applying resulting in a transformed frame.

According to at least one embodiment, the microprocessor 21 can be configured for applying to at least one frame of at least one given shot a second color transformation already applied to at least one frame of another shot of the input content.

As will be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1. Method for color grading at least one first color frame according to at least one first reference color frame, said method comprising:

    - selecting a color transformation already applied to at least one second color frame, according to at least one second reference color frame, said second color frame being different from said first color frame;
    - applying, to said first color frame, said selected color transformation.

2. Method for color grading according to claim 1, said method being **characterized in that** said first and second color frames are part of a same visual content.

3. Method for color grading according to claim 1 or 2, said method being **characterized in that** said first and second reference color frames are part of a same visual content.

4. Method for color grading according to any of claims 1 to 3, said method being **characterized in that** selecting said color transformation takes into account at least one criterion of spatial, temporal and/or color proximity between said first and said second color frames.

5. Method for color grading according to any of claims 1 to 4, said method being **characterized in that**:

    - said first color frame belongs to a first shot of a first audiovisual content,
    - said first reference color frame belongs to a first reference shot of a first reference audiovisual content, said first reference shot corresponding to said first shot in said first reference audiovisual content;

    and said method comprises associating said first shot to at least one pair of matching frames, comprising an input frame belonging to said first shot and a reference frame belonging to said first reference shot and **in that** said color transformation applied to said transformed frame is determined according to said pair of matching frames associated with said first shot.

6. Method according to claim 5 **characterized in that** it comprises selecting said first color frame according to a distance between a color distribution of a transformed frame obtained by applying a color transformation to said first color frame and a color distribution of said first reference frame of said first reference audiovisual content.

7. Method for color grading according to any of claim 1 to 6, said method being **characterized in that**:

    - said second color frame belongs to a second shot of a second audiovisual content,
    - said second reference color frame belongs to a second reference shot of a second reference audiovisual content, said second reference shot corresponding to said second shot in said second reference content;

    and said method comprises associating said second shot to at least one pair of matching frames, comprising an input frame belonging to said second shot and a reference frame belonging to said second reference shot and **in that** said color transformation already applied to said second color frame has been determined according to said pair of matching frames associated with said second shot.

8. Method according to claim 7 **characterized in that** it comprises selecting said second shot according to a distance between a color distribution of a transformed frame obtained by applying said color transformation to said second color frame and a color distribution of a reference color frame of said second reference audiovisual content.

9. An electronic device comprising at least one memory and one or several processors configured for collectively color grading at least one first color frame according to at least one first reference color frame, said color grading comprising ;

    - selecting a color transformation already applied to at least one second color frame, according to at least one second reference color frame, said second color frame being different from said first color frame;
- applying, to said first color frame, said selected color transformation.

10. Electronic device according to claim 10, wherein said first and second color frames are part of a same visual content.

11. Electronic device according to claim 11 or 12, wherein said first and second reference color frames are part of a same visual content.

12. Electronic device according to claim 10 or 11, wherein selecting said color transformation takes into account at least one criterion of spatial, temporal and/or color proximity between said first and said second color frames.

13. Electronic device according to any of claims 10 to 12, wherein said first and/or second color frame is a still image.

14. A non-transitory computer readable program product, **characterized in that** it comprises program code instructions for performing, when said non-transitory software program is executed by a computer, a method for color grading at least one first color frame according to at least one first reference color frame, said method comprising:

- selecting a color transformation already applied to at least one second color frame, according to at least one second reference color frame, said second color frame being different from said first color frame;
- applying, to said first color frame, said selected color transformation.

15. Computer readable storage medium carrying a software program **characterized in that** it comprises program code instructions for performing, when said non-transitory software program is executed by a computer, a method for color grading at least one first color frame according to at least one first reference color frame, said method comprising:

- selecting a color transformation already applied to at least one second color frame, according to at least one second reference color frame, said second color frame being different from said first color frame;
- applying, to said first color frame, said selected color transformation.

100

110

Shot obtaining

Associating shot with pair of frames — 120

Spatial matching — 130

Determining color transform — 140

Applying determined Color transform — 150

Compute quality metric — 160

Quality metrix Ok?

Yes

No

170 — Applying another color transform

172 — Selecting color transform

180 — Color grading of shot

190 — Rendering

Figure 1

Figure 2

Europäisches
Patentamt
European
Patent Office
Office européen
des brevets

**EUROPEAN SEARCH REPORT**

Application Number

EP 16 19 0283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2013/051666 A1 (ATKINS ROBIN [US])<br>28 February 2013 (2013-02-28)<br>* abstract; figure all *<br>* paragraphs [0003], [0017], [0018],<br>[0044], [0062], [0063], [0073],<br>[0074], [0083] * | 1-4,6,8,<br>13-15<br>5,7 | INV.<br>H04N1/60 |
| Y | GB 2 432 472 A (GREENPARROTPICTURES LTD<br>[IE]) 23 May 2007 (2007-05-23)<br>* the whole document * | 5,7 | |
| A | M Lefebvre ET AL: "EUROGRAPHICS 2014/ S A<br>Survey of Color Mapping and its<br>Applications",<br>,<br>1 April 2014 (2014-04-01), XP055194560,<br>Retrieved from the Internet:<br>URL:http://taniapouli.co.uk/research/EG201<br>4star.pdf<br>[retrieved on 2015-06-09]<br>* the whole document * | 1-15 | |

TECHNICAL FIELDS
SEARCHED (IPC)

H04N

The present search report has been drawn up for all claims

| Place of search | Date of completion of the search | Examiner |
|---|---|---|
| The Hague | 3 November 2016 | Winne, Dominique |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 19 0283

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2016

| Patent document cited in search report | | Publication date | Patent family member(s) | Publication date |
|---|---|---|---|---|
| US 2013051666 | A1 | 28-02-2013 | NONE | |
| GB 2432472 | A | 23-05-2007 | NONE | |

EPO FORM P0459

For more details about this annex : see Official Journal of the European Patent Office, No. 12/82